# EUROPÄISCHE PATENTSCHRIFT

(11) **EP 2 621 786 B1**
(45) Veröffentlichungstag und Bekanntmachung des Hinweises auf die Patenterteilung: **29.05.2019**
(21) Anmeldenummer: 11767673.4
(22) Anmeldetag: 30.09.2011
(51) Int. Cl.: B62B 5/06, B62B 3/14

(54) **TRANSPORTWAGEN MIT SCHIEBEGRIFF**
TROLLEY WITH HANDLE BAR
CHARIOT DE TRANSPORT AVEC POIGNÉE DE POUSSÉE

(30) Priorität: 02.12.2010 DE 102010053032; 30.09.2010 DE 202010013748 U
(43) Veröffentlichungstag der Anmeldung: 07.08.2013
(73) Patentinhaber: Filosi, Andreas, 82178 Puchheim (DE); Wieth, Franz, 82178 Puchheim (DE)
(72) Erfinder: Sonnendorfer, Horst, verstorben (DE); Wieth, Franz, 82178 Puchheim (DE)
(74) Vertreter: Braun-Dullaeus, Karl-Ulrich
(86) Internationale Anmeldenummer: PCT/EP2011/067149
(87) Internationale Veröffentlichungsnummer: WO 2012/042033

(56) Entgegenhaltungen:
- WO-A1-96/11130
- WO-A1-2007/062613
- US-A- 5 687 984
- US-A1- 2003 132 614
- US-A1- 2003 229 966
- US-A1- 2010 058 555
- US-B1- 6 299 195

## Beschreibung

Die Erfindung betrifft einen von Hand bewegbaren Transportwagen, aufweisend ein Befestigungselement zur Befestigung des Schiebegriffs an einem Grifftragarm des Transportwagens, wobei das Befestigungselement eine zumindest im wesentlichen quer verlaufende Befestigungsachse für ein Griffteil ausbildet, und wobei die Längsachse des Griffteils zumindest im wesentlichen senkrecht zu der Befestigungsachse angeordnet ist.

Von Hand bewegbare Transportwagen werden insbesondere als sogenannte Einkaufswagen im Groß- und Einzelhandel eingesetzt. Je nach Einsatzzweck weisen sie unterschiedliche Formen und Größen auf. Transportwagen für kleine bis mittelgroße Güter des Einzelhandels sind meist korbförmig ausgebildet und verfügen über zwei endseitig vorstehende Grifftragarme, zwischen denen eine quer verlaufende Griffstange befestigt ist. Mittig an der Griffstange angefasst, kann ein nur wenig beladener Einkaufswagen leicht mit einer Hand durch die Gänge eines Geschäfts geschoben werden. Ist der Einkaufswagen gefüllt, wird die Griffstange beidhändig umgriffen. Dies erlaubt eine bessere Kraftübertragung, und vor allen eine kontrollierte Richtungsänderung des nun schweren Einkaufswagens durch gegenläufiges Schieben und Ziehen an der Griffstange. Der Nachteil solcher Griffstangen ist, dass die Hände entgegen ihrer natürlichen Position immer seitlich gedreht werden müssen, um den quer verlaufenden Griff umfassen zu können.

Transportwagen für schwere und sperrige Güter, wie sie beispielsweise in einem Bau- oder Großmarkt zu finden sind, verfügen meist über eine ebene, seitlich offene Ladefläche und außen am Transportwagen hochstehende Grifftragarme, an deren oberen Ende senkrecht ausgerichtete Handgriffe befestigt sind. Solche nach oben stehende, idealerweise zum Nutzer hin angewinkelte Handgriffe kommen der natürlichen Handhaltung eines Menschen entgegen und erleichtern es ihm, auch schwer beladene Transportwagen zu bewegen. Beim Umfassen dieser Handgriffe nimmt das Armskelett eine Position ein, in der die Kraft der Oberarmmuskeln effizient in eine schiebende oder ziehende Bewegung der Hände umgesetzt werden kann. Ein derartiger Transportwagen wird in der DE 10 2006 043 522 A1 gezeigt.

Weiter sind Einkaufswagen bekannt, welche die Vorteile beider Griffformen nutzen. Sie verbinden zwei senkrecht ausgerichtete, dem Nutzer zugeneigte Griffabschnitte mit einem quer verlaufenden rohrförmigen Schiebegriff. Ein derartiger Transportwagen ist beispielsweise aus der DE 10 2006 034 048 A1 bekannt.

Das US 2010/0058555 A1 zeigt einen Schiebegriff mit einem Griffteil für einen Transportwagen, wobei der Schiebegriff mittels eines Befestigungselementes drehbar an einem Grifftragarm befestigt wird.

Das US 2003/0132614 A1 zeigt zwei Schiebegriffe mit zwei Griffteilen für einen Kinderwagen, wobei die Schiebegriffe mittels Befestigungselemente drehbar an einem einzigen Grifftragarm befestigt sind. Ein weiterer Schiebewagen ist in dem US 6,299,195 B1 gezeigt. Hierbei ist ein rechteckförmiger Schiebegriff drehbar an den Schiebewagen angebracht.

Weiters zeigt die US 5,687,984 A1 einen von Hand bewegbaren Transportwagen gemäß dem Oberbegriff von Anspruch 1.

Diese Konstruktionen sind in mehrfacher Hinsicht begrenzt. Zum einen ist stets zu beachten, dass die Position des Schiebegriffs und der Schiebestange ein Zusammenschieben der Einkaufswagen nicht behindert, so dass sie stets oberhalb oder seitlich versetzt zum in der Reihe nachfolgenden Einkaufswagen angeordnet sein müssen. Die Höhe der senkrechten Handgriffe und der Griffstange muss so ausgelegt sein, dass ein durchschnittlicher großer Nutzer sowohl den senkrechten Handgriff als auch die quer verlaufend Griffstange bequem umfassen kann. Zudem sollte der senkrechte Handgriff ausreichend lang bemessen sein, so dass er mit der ganzen Hand umgriffen werden kann. Nur dann ist eine ergonomische Schiebeposition möglich. Ein senkrecht ausgerichteter Handgriff definiert somit stets den höchsten Punkt der Griffkonstruktion.

Zum Transport an ihren Einsatzort werden die in Reihen zusammengeschobenen Einkaufswagen in Lagen aufeinandergestapelt. Ergonomisch ausgebildete, nach oben ausgerichtete Griffabschnitte stehen dann deutlich über das Niveau der zusammengeschobenen Einkaufswagen vor. Um mehrere Lagen von zusammengeschobenen Einkaufswagen platzsparend stapeln zu können, dürfen die senkrechten Griffteile also nicht beliebig in die Höhe stehen. Diese Vorgabe verhindert, nach oben vorstehende Handgriffe mit einer ergonomisch ausreichende Länge zu verbauen.

Es ist Aufgabe der Erfindung einen von Hand bewegbaren Transportwagen vorzuschlagen, dessen Handgriff, im weiteren als Griffteil beschrieben, ergonomisch ausgebildet ist, ohne beim Transport der Einkaufswagen Platz verschenken zu müssen.

Diese Aufgabe wird durch einen von Hand bewegbaren Transportwagen mit den Merkmale des Anspruchs 1 gelöst. Ein wesentlicher Grundgedanke der Erfindung liegt darin, dass das Griffteil des Schiebegriffs drehbar um die Befestigungsachse gelagert ist und dass das Griffteil in zumindest einer Position fixierbar ist. Das erfindungsgemäß ausgebildete

Griffteil kann auf diese Weise in seiner Verschwenkebene um die Befestigungsachse unterschiedliche Positionen einnehmen. Aufgrund der drehbaren Lagerung kann das Griffteil in einer für ein Umgreifen mit der gesamten Hand erforderlichen Länge ausgebildet werden, ohne bei der Anlieferung der Transportwagen Platz verschenken zu müssen.

In seine Transportstellung geschwenkt, nimmt das Griffteil eine eher liegenden oder sogar nach unten gerichtete Position ein. Derart verschwenkt, ragt das erfindungsgemäße Griffteil zumindest nicht mehr wesentlich über das Niveau des Grifftragarms hinaus. Vorzugsweise weist das freie Ende des Griffteils in der Transportposition in Richtung des Einkaufswagens, wodurch die Gesamtlänge des Einkaufswagens und damit der Platzbedarf weiter verringert wird. Zum Aufrichten des Griffteils wird es um die Befestigungsachse verschwenkt und nimmt dann eine Schiebeposition ein, in der es deutlich über das Niveau des Grifftragarms hervor steht. Das verschwenkbare Griffteil kann in Folge am Einkaufswagen in einem Bereich angeordnet werden, in der es durch die den Einkaufswagen schiebende Person jederzeit einfach zu greifen ist.

Diese als Schiebeposition bezeichnete aufgerichtete Stellung des Griffteils wird üblicherweise nach der Anlieferung der Transportwagen eingestellt. Nun werden an mit Handgriffen ausgerüsteten Einkaufswagen regelmäßig zwei Griffteile vorgesehen, deren Schiebeposition aufeinander abgestimmt sein sollte. Deshalb ist es von Vorteil, wenn die Schiebeposition der Griffteile als definierte Position vorgegeben ist. Dann muss beim Verschwenken der beiden Griffteile nicht auch noch auf die zueinander korrekte Ausrichtung der beiden Griffteile geachtet werden.

Eine aufeinander abgestimmte Position der beiden Griffteile lässt sich auf besonders einfache Weise durch ein Einrasten der Griffteile bei Erreichen der gewünschten Stellung vorgeben. Die beiden Griffteile des Einkaufswagens sind nach der Verschwenkung in die vorgegebene Rastposition stets im gleichen Winkel ausgerichtet. In einer besonders vorteilhaften Ausführung werden die Griffteile mit Erreichen der Schiebeposition permanent fixiert, so dass die das Griffteil in die Schiebeposition verschwenkende Person keine weiteren Montageschritte vornehmen muss.

Ist die Befestigungsachse quer ausgerichtet, verläuft die Längsachse des Grifffortsatzes in einer bevorzugten Ausführungsform in einem Winkel zwischen 70 und 98 Grad zu der Befestigungsachse geneigt. Eine solche Neigung der Griffteile wird vom Benutzer des Einkaufswagens als besonders angenehm empfunden.

In der natürlichen Ruhestellung der Arme sind die Handflächen leicht zur Longitudinalachse des Körpers geneigt. Dabei befindet sich der an den Daumen angrenzende Bereich der Handfläche näher an der Longitudinalachse als der an den kleinen Finger angrenzende Bereich. Dieser natürlichen Stellung der Hände entspricht es, wenn die Griffteile in gewissem Maße von der Senkrechten abweichen, indem die von der Befestigungsachse entfernten Enden einander zugeneigt sind. Selbstverständlich müssen die Griffteile nicht gerade ausgeführt sein, sondern können zur weiteren ergonomischen Optimierung entlang ihrer Längsachse einen gebogenen Verlauf nehmen.

Besonders vorteilhaft ist es, wenn die Griffteile eine Aussparung für den Daumen aufweisen. Derart ausgebildete Griffteile lassen sich besonders angenehm umgreifen. Bei der Festlegung der Schiebeposition ist zu beachten, dass sie für die das Griffteil umfassende Person am bequemsten ist, wenn die das Griffteil leicht von ihr weg geneigt ist.

Die ergonomische Ausformung und Positionierung macht sich nicht nur beim gleichmäßigen Schieben des Einkaufswagens bemerkbar, wenn hauptsächlich der musculus trizeps eingesetzt wird, oder beim Ziehen des Einkaufswagens mit dem musculus bizeps. Insbesondere bei einer Kurvenfahrt oder noch stärker beim Rangieren um die Hochachse des Transportwagens schiebt der die Griffteile umfassende Benutzer mit dem einen Arm und zieht mit dem anderen Arm. Dementsprechend wird beim einen Arm der musculus bizeps und beim anderen Arm der musculus trizeps angespannt.

Die erfindungsgemäß ausgebildeten Griffteile erleichtert so insbesondere schwächeren Personen das Rangieren von schwereren Transportwagen. Der vorteilhafte Effekt der erfindungsgemäßen Stellung der Griffteile macht sich umso mehr bemerkbar, je schwächer die schiebende Person ist und je schwerer der Transportwagen ist.

In einer weiteren bevorzugten Ausführungsform verläuft die Befestigungsachse des Griffteils in einem Winkel zwischen 10 und 30 Grad geneigt zu der Waagrechten, wobei das Griffteil in seiner nach unten verschwenkten Position nach außen versetzt ist. Das Griffteil ist in dieser Ausführungsform sozusagen entlang einer schiefen Ebene verschwenkbar. Hierdurch kann das von der Befestigungsachse abgewandte Ende des Griffteil aus einer seitlich nach außen versetzt liegenden Transportposition in eine zwischen den Grifftragarme des Einkaufswagens liegende Schiebeposition verschwenkt werden. Die nach unten gerichtete, seitlich nach außen versetzte Transportposition lässt die für ein Zusammenschieben der Einkaufswagen notwendige Einschuböffnung am Einkaufswagen frei.

Ein an einer waagrechten Befestigungsachse befestigtes Griffteil ragt hingegen die Einschuböffnung des Einkaufswagens hinein, wenn es unter das Niveau der Grifftragarme verschwenkt werden würde. Ein enges Zusammenschieben der Einkaufswagen wäre dann nicht möglich. Um dies zu verhindern, ist es vorteilhaft, bei einer waagrecht ausgerichteten Befestigungsachse ein Verschwenken des Griffteils in den Bereich der Einschuböffnung durch eine Begrenzung des Drehwinkels zu verhindern.

Vorzugsweise weist das Befestigungselement an seinem dem Grifftragarm abgewandten Ende ein im wesentlichen waagrecht verlaufendes Griffprofil auf. Der Nutzer des Einkaufswagens kann dann zwischen verschiedenen Griffen wählen und den für ihn angenehmsten aussuchen. In der erfindungsgemäßen, besonders ergonomisch ausgebildeten Ausführungsform fällt das Niveau des Griffprofils der natürlichen Handstellung folgend zum Grifftragarm hin ab. Zusätzlich kann die Form des Griffprofils unter Berücksichtigung der weiteren bereits dargelegten ergonomischen Gesichtspunkte angepasst werden.

Auch ist es vorteilhaft, wenn das Befestigungselement einen vergrößerten Bereich aufweist, der beim Schieben des Transportwagens oder beim Warten an der Kasse als Auflagefläche für die Handflächen genutzt werden kann. Ein derart vergrößerter Bereich kann zusätzlich leicht als eine Aufnahme für ein Pfandschloss und/oder eine Schlüsselbefestigung ausgebildet werden.

In einer besonders bevorzugten Ausgestaltung werden die beiden an den Grifftragarmen eines Einkaufswagens gehaltenen Schiebegriffe über ein zwischen ihnen angeordnetes Verbindungselement miteinander verbunden. Die so gebildete Schiebegriffeinheit bildet eine Querverstrebung aus, welche den Einkaufswagen zusätzlich stabilisiert. Dabei kann das Verbindungselement als einfache Griffstange ausgebildet sein.

Ein besonderer Vorteil ergibt sich daraus, dass die Querverstrebung an den selben Befestigungselementen wie die Griffteile montiert und auch befestigt wird. Hierdurch sind weniger Arbeitschritte zum Zusammenbau der Schiebegriffeinheit erforderlich.

Der durch das Verbindungselement zusätzlich verfügbare Raum kann jedoch auch genutzt werden, um eine Halterung für eine Münzkassette und/oder eine Schlüsselbefestigung und/oder einen Scannerhalter auszubilden. Vorteilhafterweise weist das Verbindungselement eine zum Nutzer der Schiebegriffeinheit hin geneigte, insbesondere als elektronisches Display ausgebildete Informationsfläche auf, über die dem Nutzer für ihn interessante Informationen, beispielsweise aktuelle Werbung oder Daten zur mit dem Scanner aufgenommenen Waren dargeboten werden können.

In vorteilhafter Weise sind im Bereich der Schiebstange und/oder des Griffteils und/oder des Befestigungselements elektrisch leitfähige Elemente vorhanden, die mit den Metallteilen des Transportwagens in Verbindung stehen. Der Vorteil ergibt sich daraus, dass die Metallteile des Einkaufswagens, die grundsätzlich das Verhalten eines Kondensators aufweisen, geerdet werden können. Die Erdung erfolgt durch den am Boden stehenden Benutzer über die leitenden Elemente zu den Metallteilen des Transportwagens. Hierdurch kann sich die beim Schieben des Transportwagens entstehende Ladung nicht in den Metallteilen speichern.

Die Erfindung wird anhand möglicher Ausführungsbeispiele näher erläutert, ohne dass die Erfindung auf diese Ausführungsbeispiele begrenzt sein soll.

Es zeigt im Einzelnen :
Figur 1: eine Ausführungsform einer erfindungsgemäßen Schiebegriffeinrichtung mit in Schiebeposition befindlichen Griffteilen in einer schematischen Ansicht aus der Richtung des Benutzers,
Figur 2: Eine perspektivische Darstellung der Schiebegriffeinrichtung gemäß Figur 1,
Figur 3: eine seitliche Ansicht der in Figur 1 gezeigten Schiebegriffeinrichtung,
Figuren 4 und 5: Weitere seitliche Ansichten der in Figur 1 gezeigten Schiebegriffeinrichtung mit den Griffteilen in zwei möglichen Transportpositionen,
Figur 6: Ein Ausführungsbeispiel eines Schiebegriffs mit einer geneigten Befestigungsachse, bei dem das Griffteil in der Schiebeposition angeordnet ist,
Figur 7: Den Schiebegriff gemäß Figur 6 mit dem Griffteil in der Transportposition, und
Figur 8: Eine Aufsicht auf den Schiebegriff gemäß Figur 6.

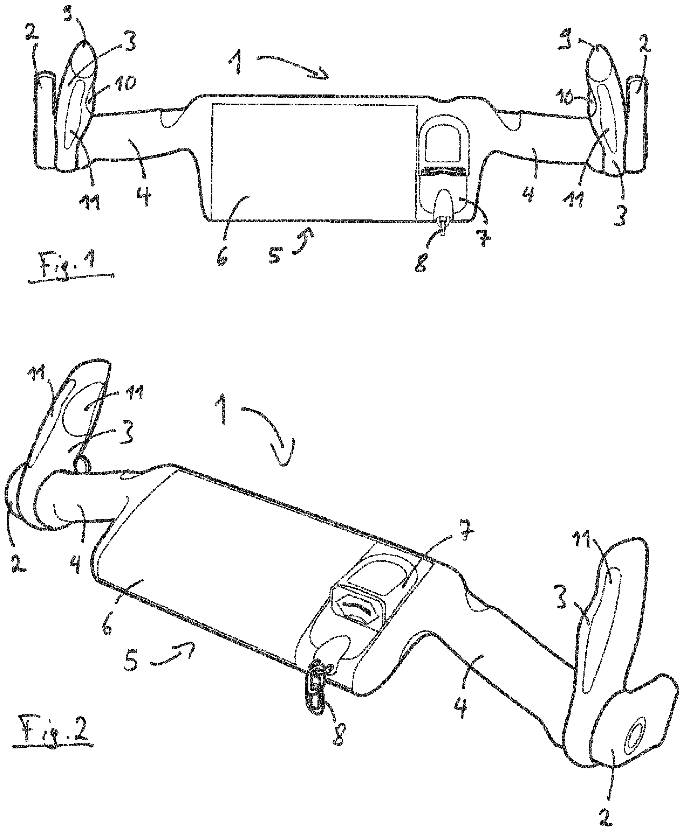

Die in Figur 1 gezeigte Ausführungsform umfasst äußere, die Schiebegriffeinrichtung 1 abschließende Befestigungselemente 2, mit denen die Schiebegriffeinrichtung 1 an hier nicht gezeigten Grifftragarmen befestigt ist. Die Befestigungselemente 2 umfassen einen nach innen gerichteten, zumindest im wesentlichen quer verlaufenden rohrförmigen Abschnitt, auf dem sie die verschwenkbaren Griffteile 3 tragen. An der Innenseite der Befestigungselemente 2 schließen insgesamt im wesentlichen quer ausgerichtete Griffprofile 4 an, welche in ein Verbindungselement 5 übergehen. Quer im Sinne dieser Anmeldung bedeutet parallel zu der Ebene, die durch die Berührungspunkte der Rollen des Transportwagens am Boden definiert ist.

Das Verbindungselement 5 ist flächig ausgeführt und weist ein Display 6 sowie ein seitlich versetzt angeordnetes Pfandschloss 7 mit daran befestigtem Kettenabschnitt 8 auf. Natürlich können auch andere Ausführungsformen vorgesehen werden, beispielsweise mit einem das Verbindungselement vollständig bedeckenden Display 6. Das Pfandschloss 7 und der den nicht gezeigten Schlüssel tragende Kettenabschnitt 8 können auch an dem Befestigungselement 2 angeordnet sein.

Die Griffteile 3 sind aus ergonomischen Gründen entlang ihrer Längsachse leicht nach Innen gebogen, so dass ihre von der Schiebegriffeinheit 1 wegweisenden Enden 9 einander zugeneigt sind. Aussparungen 10 für die Daumen erleichtern zusätzlich das Umgreifen der Griffteile 3. In die Griffteile 3 eingelegt sind elektrisch leitende Abschnitte 11, über die sich aufgebaute Ladung ableiten lässt.

In der perspektivischen Darstellung gemäß Figur 2 wird deutlich, dass die Befestigungselemente 2 außen als Griffkappen ausgebildet sind, die auf einen nicht gezeigten Grifftragarm eines Einkaufswagens aufgesetzt und dort auf bekannte Weise befestigt werden können. Das Befestigungselement 2 bildet eine zumindest im wesentlichen quer verlaufende Befestigungsachse S aus. Auf der Befestigungsachse S ist das jeweilige verschwenkbare Griffteil 3, das daran anschließende, im wesentlichen quer ausgerichtete Griffprofil 4 und das Verbindungselement 5 an diesem Befestigungselement 2 befestigt. Die Befestigungsachse S schneidet den Grifftragarm. So ist es möglich, das Befestigungselement 2 zusammen mit den anderen Teilen der Schiebegriffeinrichtung über ein gemeinsames Befestigungsmittel, insbesondere eine Schraube, am Grifftragarm zu befestigen. Alle Teile der Schiebegriffeinrichtung können auf diese Weise in einem Arbeitsschritt am Grifftragarm befestigt werden. Die einfache Befestigung ist natürlich auch für die anderen erfindungsgemäßen Ausgestaltungen der Schiebegriffeinrichtung bzw. des Schiebegriffs gegeben.

Die beiden Griffteile 3 befinden sich in einer Schiebeposition, in der sie jeweils um ca. 20 Grad vom Nutzer des Einkaufswagens weg geneigt sind. Die insgesamt quer ausgerichteten Griffprofile 4 sind zum Verbindungselement 5 hin leicht nach oben angestellt, so dass das anschließende flächige Verbindungselement 5 zum Nutzer hin eine erhöhte Position einnimmt. Das Pfandschloss 7 ist in das Verbindungselement 5 teilintegriert.

Produktionstechnisch ist es von Vorteil, wenn das Verbindungselement 5 und die an es anschließenden Griffprofile 4 einstückig ausgeführt sind. Ein derart standardisiertes Kunststoffteil lässt sich einfach herstellen. Werden die Befestigungselemente 2 mit unterschiedlichen Breiten ihrer insgesamt quer verlaufenden Abschnitt gefertigt, kann eine Anpassung der Schiebegriffeinheit 1 an den Abstand der Grifftragarme eines Einkaufswagentyps durch die Auswahl des passenden Befestigungselements 2 erfolgen.

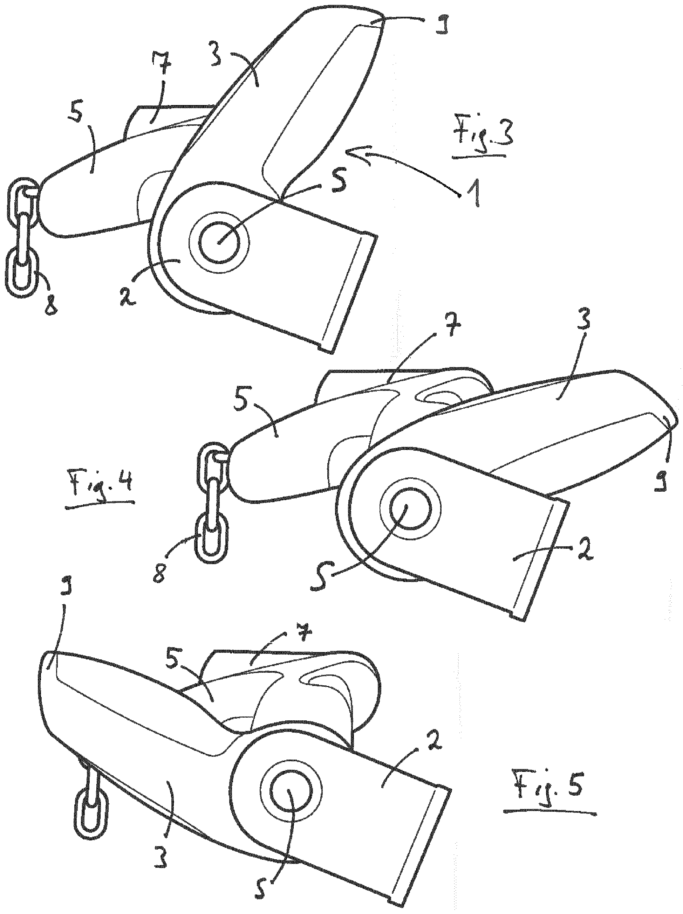

Figur 3 zeigt eine Seitenansicht der Schiebegriffanordnung 1, wobei das in Blickrichtung vordere Griffteil 3 das gleich ausgerichtete hintere Griffteil 3 verdeckt. In dieser Darstellung wird deutlich, dass die Kappe des Befestigungselements 2 je nach vorgegebenen Anstellwinkel des Grifftragarms am Einkaufswagen ausgerichtet werden kann. Ein Anpassen der restlichen Bestandteile der Schiebegriffeinrichtung 1 ist nicht erforderlich.

Das Verbindungselement 5 ist aufgrund der hier ebenfalls verdeckten angestellten Griffprofile 4 oberhalb der in dieser Darstellung senkrecht zu der Seitenansicht ausgerichteten Befestigungsachse S angeordnet. Teilweise zu sehen sind das teilintegrierte, zum Nutzer hin aus dem Verbindungselement 5 herausstehende Pfandschloss 7 sowie mehrere Glieder des Kettenabschnitts 8.

Die Figuren 4 und 5 zeigen alternative Transportpositionen des Griffteils 3, dass aufgrund seiner waagrechten Befestigungsachse S nicht mit seinem Ende 9 nach unten geschwenkt werden kann, da es in dieser Position die Einschuböffnung zum Zusammenschieben der Einkaufswagen in einer Reihe blockieren würde. In Figur 4 ist das Griffteil zum Einkaufswagen hin geneigt und dabei so flach angestellt, dass es das Niveau der Schiebegriffeinrichtung 1 nicht wesentlich erhöht. Gleiches gilt für die in Figur 5 gezeigte, vom Einkaufswagen weg geneigte Transportposition.

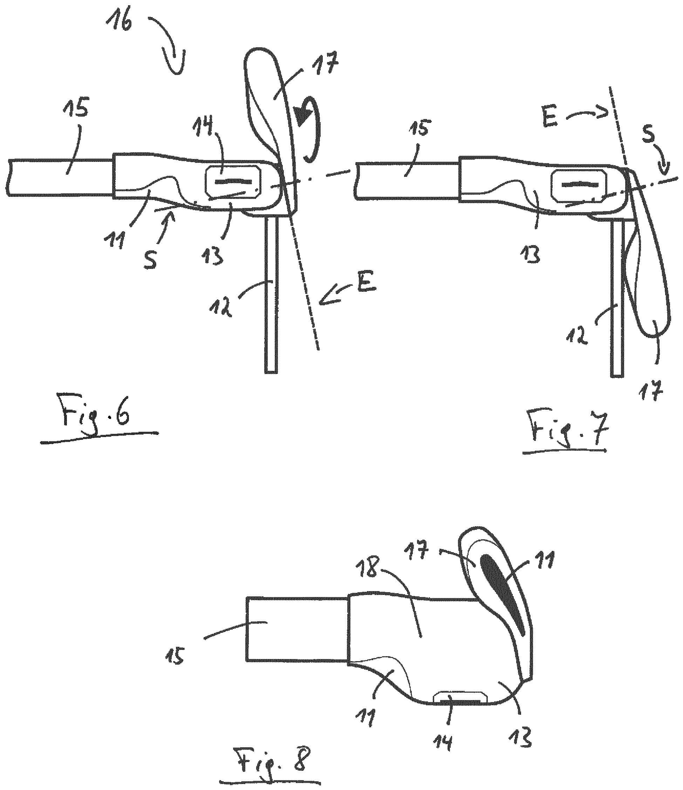

In der Figur 6 ist ein Grifftragarm 12 eines Einkaufswagens dargestellt. Das hier gezeigte Befestigungselement 13 ist am Grifftragarm 12 auf eine der üblichen Weisen befestigt.

Das Befestigungselement 13 ist großflächig ausgebildet und weist auf der Oberseite einen Bereich zum Ablegen der Hände auf. In das Befestigungselement 13 ist ein Pfandschloss 14 integriert.

Mit dem Befestigungselement 13 verbunden ist die Schiebestange 15. Im gezeigten Beispiel ist nur ein Teil der Schiebestange 15 gezeigt. Die Schiebestange 15 reicht bei dem erfindungsgemäßen Schiebegriff 16 bis auf die gegenüberliegende Seite. Dort ist die Schiebestange 15 mit einem weiteren Befestigungselement 13 verbunden. Dieses hier nicht dargestellte Befestigungselement 13 umfasst jedoch kein Pfandschloss, doch ist es denkbar, ein anderes Funktionselement in das dortige Seitenteil zu integrieren.

Das Griffteil 17 ist am Befestigungselement 13 um eine Befestigungsachse S drehbar gelagert, welche schräg zu der Ebene verläuft, die durch die Berührungspunkte der Rollen des Transportwagens verläuft. Das Griffteil 17 kann somit entlang einer geneigten Ebene E von einer oberen, ergonomisch nach innen geneigten Schiebeposition in einen untere nach außen gerichtet Transportposition verschwenkt werden, in welcher das Ineinanderschieben der Einkaufswagen nicht behindert wird.

Im Befestigungselement 13, im Schiebegriff 15 und im Griffteil 17 befinden sich leitfähige Bereiche 11, die mit den Metallteilen des Transportwagens in Verbindung stehen. Über diese Bereiche 11 findet die weiter oben beschriebene Erdung des Transportwagens statt.

Optional sind an anderen in der Figur nicht sichtbaren Bereichen weitere elektrisch leitende Bereiche vorhanden.

Die Figur 7 zeigt die aus der Figur 6 bekannten Elemente mit dem Unterschied, dass nun das Griffteil 17 entlang der Ebene E nach unten geschwenkt ist.

Die Figur 8 zeigt den Schiebegriff 16 in Gesamtansicht mit den gegenüber der Schiebestange 15 großflächig abgerundet ausgestalteten Auflageflächen 18 für die Hände.

Die Auflageflächen 18 sind gegenüber dem Niveau der Schiebestange 15 in Richtung des Grifftragarms abfallend ausgestaltet, um die Auflageflächen 18 ergonomisch zu optimieren.

## Patentansprüche

1. Von Hand bewegbarer Transportwagen, aufweisend eine Schiebegriffanordnung mit zwei Grifftragarmen, aufweisend zwei Befestigungselemente (2) zur Befestigung des Schiebegriffs an jeweils einem Grifftragarm des Transportwagens, wobei jedes Befestigungselement (2) eine zumindest im wesentlichen quer verlaufende Befestigungsachse (S) für jeweils ein Griffteil (3) ausbildet, wobei die Längsachsen der Griffteile (3) zumindest im wesentlichen senkrecht zu der Befestigungsachse (S) angeordnet ist, und wobei die Griffteile (3) drehbar um ihre Befestigungsachse (S) gelagert sind und wobei die Griffteile (3) in einer Schiebeposition fixierbar sind, wobei die Schiebeposition als definierte Position vorgegeben ist, wobei die definierte Position durch ein Einrasten der Griffteile (3) bei Erreichen der gewünschten Stellung vorgegeben ist,
**dadurch gekennzeichnet,**
**dass** jedes Befestigungselement (2) an dem seinem Grifftragarm abgewandten Ende ein im wesentlichen quer verlaufendes Griffprofil (4) aufweist, wobei das Niveau des Griffprofils (4) zum Grifftragarm hin abfällt.

2. Transportwagen nach Anspruch 1,
**dadurch gekennzeichnet,**
**dass** die Längsachse jedes Griffteils (3) in einem Winkel zwischen 70 und 98 Grad geneigt zu der Befestigungsachse (S) verläuft.

3. Transportwagen nach Anspruch 1 oder 2,
**dadurch gekennzeichnet,**
**dass** die Befestigungsachse (S) in einem Winkel zwischen 10 und 30 Grad geneigt zur Waagrechten verläuft.

4. Transportwagen nach einem der vorangegangenen Ansprüche,
**dadurch gekennzeichnet,**
**dass** ein leitender Kunststoff (11) des Griffteils (3) und/oder des Griffprofils (4) eine elektrische Verbindung zu leitenden Teilen des Transportwagens aufweist.

5. Transportwagen nach einem der vorangegangenen Ansprüche,
**dadurch gekennzeichnet,**
**dass** ein Befestigungselement (2) eine Aufnahme oder Halterung für ein Pfandschloss (7) und/oder eine Schlüsselbefestigung (8) umfasst.

6. Transportwagen nach einem der vorangegangenen Ansprüche,
**dadurch gekennzeichnet,**
**dass** die definierte Position durch ein Einrasten der Griffteile (3) bei Erreichen der Schiebeposition vorgebbar ist.

7. Transportwagen nach einem der vorangegangenen Ansprüche,
**dadurch gekennzeichnet,**
**dass** die beiden Griffteile (3) mittels eines zwischen ihnen angeordneten Verbindungselements (5) verbunden sind.

8. Transportwagen nach Anspruch 7,
**dadurch gekennzeichnet,**
**dass** das Verbindungselement (5) eine Halterung für ein Pfandschloss (7) und/oder eine Schlüsselbefestigung (8) und/oder einen Scannerhalter umfasst.

9. Transportwagen nach Anspruch 7 oder 8,
**dadurch gekennzeichnet,**
**dass** das Verbindungselement (5) eine zum Nutzer der Schiebegriffeinheit (1) hin geneigte, insbesondere elektronische Informationsfläche (6) aufweist.

## Claims

1. Transport trolley, that can be moved by hand, having a push handle arrangement with two handle support arms, having two fastening elements (2) for fastening the push handle on a respective handle support arm of the transport trolley, wherein each fastening element (2) forms a fastening axis (S), extending at least substantially transversely, for a respective handle part (3), wherein the longitudinal axes of the handle parts (3) are arranged at least substantially perpendicular to the fastening axis (S), and wherein the handle parts are mounted to be rotatable about their fastening axis (S), and wherein the handle parts (3) can be fixed in a push position, wherein the push position is specified as a defined position, wherein the defined position is specified by an engagement of the handle parts (3) upon reaching the desired position **characterized in that** each fastening element (2) has a handle profile (4) extending substantially transversely at the end facing away from its handle support arm, wherein the level of the handle profile (4) slopes down to the handle support arm.

2. Transport trolley according to claim 1, **characterized in that** the longitudinal axis of each handle part (3) extends at an angle inclined between 70 and 98 degrees to the fastening axis (S).

3. Transport trolley according to claim 1 or 2, **characterized in that** the fastening axis (S) extends at an angle inclined between 10 and 30 degrees to the horizontal.

4. Transport trolley according to any one of the preceding claims, **characterized in that** a conductive plastic material (11) of the handle part (3) and/or of the handle profile (4) has an electrical connection to conducting parts of the transport trolley.

5. Transport trolley according to any one of the preceding claims, **characterized in that** a fastening element (2) comprises an accommodation or holder for a deposit lock (7) and/or a key attachment (8).

6. Transport trolley according to any one of the preceding claims, **characterized in that** the defined position can be specified by an engagement of the handle parts (3) upon reaching the push position.

7. Transport trolley according to any one of the preceding claims, **characterized in that** the two handle parts (3) are connected by means of a connection element (5) arranged between them.

8. Transport trolley according to claim 7, **characterized in that** the connection element (5) comprises a holder for a deposit lock (7) and/or a key attachment (8) and/or a mount for a scanner.

9. Transport trolley according to claim 7 or 8, **characterized in that** the connection element (5) has an information surface (6), in particular an electronic information surface inclined toward the user of the push handle unit.

## Revendications

1. Chariot de transport à déplacement manuel, comportant un dispositif de poignée de poussée pourvu de deux bras supports de poignée, comportant deux éléments de fixation (2), destinés à fixer la poignée de poussée sur chaque fois un bras support de poignée du chariot de transport, chaque élément de fixation (2) constituant un axe de fixation (S) s'étendant au moins sensiblement à la transversale pour respectivement un élément de poignée (3), les axes longitudinaux des éléments de poignée (3) étant placés au moins sensiblement à la perpendiculaire de l'axe de fixation (S) et les éléments de poignée (3) étant logés en étant rotatifs autour de leur axe de fixation (S) et les éléments de poignée (3) étant susceptibles d'être fixés dans une position de poussée, la position de poussée étant prédéfinie en tant que position définie, la position définie étant prédéfinie par un enclenchement des éléments de poignée (3) à l'atteinte de la position souhaitée, **caractérisé en ce que** sur l'extrémité opposée à son bras support de poignée, chaque élément de fixation (2) comporte un profilé de préhension (4) s'écoulant sensiblement à la transversale, le niveau du profilé de préhension (4) décroissant en direction du bras support de poignée.

2. Chariot de transport selon la revendication 1, **caractérisé en ce que** l'axe longitudinal de chaque élément de poignée (3) s'écoule en étant incliné d'un un angle compris entre 70 et 98 degrés vers l'axe de fixation (S).

3. Chariot de transport selon la revendication 1 ou 2, **caractérisé en ce que** l'axe de fixation (S) s'écoule en étant incliné d'un angle compris entre 10 et 30 degrés vers l'horizontale.

4. Chariot de transport selon l'une quelconque des revendications précédentes, **caractérisé en ce qu'**une matière plastique (11) conductrice de l'élément de poignée (3) et/ou du profilé de préhension (4) présente une connexion électrique vers des parties conductrices du chariot de transport.

5. Chariot de transport selon l'une quelconque des revendications précédentes, **caractérisé en ce qu'**un élément de fixation (2) comprend un logement ou une attache pour une serrure de consigne (7) et/ou une fixation de clé (8).

6. Chariot de transport selon l'une quelconque des revendications précédentes, **caractérisé en ce que** la position définie est prédéfinissable par un enclenchement des éléments de poignée (3) à l'atteinte de la position de poussée.

7. Chariot de transport selon l'une quelconque des revendications précédentes, **caractérisé en ce que** les deux éléments de poignée (3) sont assemblés au moyen d'un élément d'assemblage (5) placé entre eux.

8. Chariot de transport selon la revendication 7, **caractérisé en ce que** l'élément d'assemblage (5) comprend une attache pour une serrure de consigne (7) et/ou une fixation de clé (8) et/ou un support de scanner.

9. Chariot de transport selon la revendication 7 ou 8, **caractérisé en ce que** l'élément d'assemblage (5) comporte une surface d'information (6) notamment électronique, inclinée en direction de l'utilisateur de l'ensemble de poignée de poussée.
